# EUROPÄISCHE PATENTANMELDUNG

(11) **EP 1 247 635 A2**
(43) Veröffentlichungstag der Anmeldung: **09.10.2002**
(21) Anmeldenummer: 02003702.4
(22) Anmeldetag: 19.02.2002
(51) Int. Cl.: B29C 47/68, B29C 45/24

(54) **Vorrichtung zum Filtrieren einer Flüssigkeit, insbesondere zum Filtrieren einer polymeren Kunststoffschmelze**

(30) Priorität: 02.04.2001 DE 10116408
(71) Anmelder: Maag Pump Systems Textron GmbH, 34131 Kassel (DE)
(72) Erfinder: Emhardt, Peter, 34134 Kassel (DE)
(74) Vertreter: Lau-Loskill, Philipp, Dipl.-Phys.

(57) **Zusammenfassung**

Es wird eine Vorrichtung (1) zum Filtrieren einer Flüssigkeit, insbesondere zum Filtrieren einer polymeren Kunststoffschmelze, mit einem Gehäuse (5), das in Strömungsrichtung der zu filtrierenden Flüssigkeit gesehen einen Zufuhrkanal (2), einen in einem Bolzen (6) angeordneten Verbindungskanal (4) und einen Abfuhrkanal (3) umfaßt, wobei der Verbindungskanal mindestens zwei nebeneinander angeordnete und quer zur Strömungsrichtung der Flüssigkeit im Verbindungskanal ausgerichtete Filter (9a,9b) aufweist und der Bolzen (6) flüssigkeitsdicht in einer Bohrung (7) des Gehäuses axial verschiebbar derart gelagert ist, daß durch eine axiale Verschiebung des Bolzens die beiden Filter zwischen einer Filtrierstellung, in der über den Verbindungskanal (4) der Zufuhrkanal (2) mit dem Abfuhrkanal (3) verbunden ist, und einer von außen zugänglichen Reinigungsstellung, in der die Verbindung vom Zufuhrkanal (2) mit dem Abfuhrkanal (3) unterbrochen ist, und umgekehrt bringbar sind, beschreiben. Der Verbindungskanal (4) weist in Strömungsrichtung (10) der zu filtrierenden Flüssigkeit gesehen einen ersten Bereich (4a) auf, der unmittelbar stromauf der Filter (9a,9b) angeordnet ist und einen einzigen gemeinsamen Flüssigkeitsverteilungsraum (4a) für die beiden Filter (9a,9b) ausbildet. Unmittelbar an den ersten Bereich (4a) schließt sich ein zweiter Bereich (4b) an, in dem die beiden Filter (9a,9b) nebeneinander derart angeordnet sind, daß sich die beiden Filter (9a,9b) teilweise überlappen, wobei der erste Bereich (4a) und der zweite Bereich (4b) des Verbindungskanals (4) senkrecht zur Strömungsrichtung der zu filtrierenden Flüssigkeit gesehen einen solchen Querschnitt aufweisen, der in seiner Form der Form von zwei sich überlappenden Kreisen entspricht.

## Beschreibung

Die vorliegende Erfindung betrifft eine Vorrichtung zum Filtrieren einer Flüssigkeit, insbesondere zum Filtrieren einer polymeren Kunststoffschmelze, mit den Merkmalen des Oberbegriffs des Patentanspruchs 1.

Eine Vorrichtung mit den Merkmalen des Oberbegriffs des Patentanspruchs 1 ist aus der DE 195 19 907 C bekannt. Hierbei weist die bekannte Vorrichtung, die in der DE 195 19 907 C als Siebwechselvorrichtung bezeichnet wird, ein Gehäuse auf, das in Strömungsrichtung der zu filtrierenden Flüssigkeit gesehen einen Zufuhrkanal, einen in einem Bolzen angeordneten Verbindungskanal und einen Abfuhrkanal umfaßt. Der Verbindungskanal ist bei der bekannten Siebwechselvorrichtung mit mindestens zwei, nebeneinander angeordnete und quer zur Strömungsrichtung der Flüssigkeit im Verbindungskanal ausgerichtete Filter versehen, wobei der zylindrische Bolzen entsprechend flüssigkeitsdicht in einer zylindrischen Bohrung des Gehäuses axial verschiebbar gelagert ist. Durch eine axiale Verschiebung des Bolzens werden die beiden Filter zwischen einer Filtrierstellung, in der über den Verbindungskanal der Zufuhrkanal mit dem Abfuhrkanal verbunden ist, und einer von außen zugänglichen Reinigungsstellung, in der die Verbindung vom Zufuhrkanal zum Abfuhrkanal unterbrochen ist, und umgekehrt hierzu bewegt, so daß wahlweise entweder in der Filtrierstellung, die in der DE 195 19 907 C auch als Arbeitsstellung bezeichnet ist, beide Filter gleichzeitig den hierdurch geführten Flüssigkeitsstrom filtrieren. Durch eine axiale Verschiebung des Bolzens lassen sich die Filter bei der bekannten Vorrichtung in eine solche Position bringen, die in der DE 195 19 907 C als dritte Siebwechselstellung bezeichnet ist, wobei in dieser Stellung der Siebträger eine Position einnimmt, in der die Filter von außen zugänglich sind, so daß dementsprechend die Filter bei einer Verschmutzung ausgetauscht werden können.

Bedingt dadurch, daß bei der bekannten Vorrichtung in axiale Verschieberichtung des Bolzens gesehen die beiden Filter mit axialem Abstand voneinander angeordnet sind, erfordert die bekannte Vorrichtung einen relativ lang axial ausgestalteten Bolzen, um die erforderliche Dichtfläche zwischen der Bohrungswandung und der Außenwandung des Bolzens zur Verfügung zu stellen.

Um diesen Nachteil der relativ großen axialen Länge des Bolzens und des damit zusammenwirkenden Gehäuses zu vermeiden, schlägt die DE 295 17 140 U vor, das Filter in axiale Verschieberichtung des Bolzens gesehen oval aufzuweiten, so daß dementsprechend bei dieser bekannten Filtereinrichtung die zuvor beschriebenen zwei, nebeneinander und mit Abstand voneinander angeordnete Filter durch ein einziges ovales Filter ersetzt werden. Ausdrücklich weist jedoch die DE 295 17 140 U darauf hin, daß zur Vermeidung einer über die Fläche der Filter gesehen ungleichmäßigen Flüssigkeitsströmung das bekannte, ovale Filter mit einer speziellen Siebträgerplatte, die stromab des ovalen Filters angeordnet ist und die während des Filtriervorganges das Filter abstützt, zu versehen ist, wobei diese Siebträgerplatte zur Vergleichmäßigung der Strömung im mittleren Teil des Siebes längere Kanäle und in den Eckbereiche kürzere Kanäle aufzuweisen hat.

Der vorliegenden Erfindung liegt die Aufgabe zugrunde, eine Vorrichtung zum Filtrieren einer Flüssigkeit der eingangs genannten Art zur Verfügung zu stellen, die unter Beibehaltung einer kompakten Bauweise besonders kostengünstig herstellbar und zu betreiben ist.

Diese Aufgabe wird erfindungsgemäß durch eine Vorrichtung zum Filtrieren einer Flüssigkeit, insbesondere zum Filtrieren einer polymeren Kunststoffschmelze, mit den Merkmalen des Patentanspruchs 1 gelöst.

Die erfindungsgemäße Vorrichtung zum Filtrieren einer Flüssigkeit, insbesondere zum Filtrieren einer polymeren Kunststoffschmelze, weist, wie die zuvor beschriebenen bekannten Vorrichtungen, ebenfalls ein Gehäuse auf, das in Strömungsrichtung der zu filtrierenden Flüssigkeit gesehen einen Zufuhrkanal, einen ausschließlich in einem Bolzen angeordneten Verbindungskanal und einen Abfuhrkanal umfaßt. Hierbei weist der Verbindungskanal, der durch die Dicke des Bolzens begrenzt wird, mindestens zwei nebeneinander angeordnete und quer zur Strömungsrichtung der Flüssigkeit im Verbindungskanal ausgerichtete Filter auf, wobei der Bolzen, der vorzugsweise zylindrische ausgebildet ist, flüssigkeitsdicht in einer hieran angepaßten Bohrung des Gehäuses axial verschiebbar gelagert ist. Durch eine axiale Verschiebung des Bolzens lassen sich bei der erfindungsgemäßen Vorrichtung die beiden Filter zwischen einer Filtrierstellung, in der über den Verbindungskanal der Zufuhrkanal mit dem Abfuhrkanal verbunden ist und in der der Flüssigkeitsstrom kontinuierlich durch den Verbindungskanal und damit auch durch die beiden Filter geführt wird, und einer von außen zugänglichen Reinigungsstellung, in der die Verbindung vom Zufuhrkanal mit dem Abfuhrkanal unterbrochen ist und in der die beiden Filter dem Verbindungskanal zu entnehmen und entsprechend zu reinigen bzw. auszutauschen sind, und umgekehrt hierzu bringen. Im Unterschied zu dem eingangs aufgeführten Stand der Technik weist der Verbindungskanal der erfindungsgemäßen Vorrichtung in Strömungsrichtung der zu filtrierenden Flüssigkeit gesehen einen ersten Bereich, der unmittelbar stromauf der beiden nebeneinander befindlichen Filter angeordnet ist und einen einzigen gemeinsamen Flüssigkeitsverteilungsraum für die beiden Filter ausbildet, und einen sich unmittelbar an den ersten Bereich anschließenden zweiten Bereich auf, wobei in dem zweiten Bereich die beiden Filter nebeneinander derart angeordnet sind, daß sich die beiden Filter teilweise überlappen. Sowohl der erste Bereich als auch der zweite Bereich des Verbindungskanals besitzt senkrecht zur Strömungsrichtung der zu filtrierenden Flüssigkeit und somit in ihrer Draufsicht gesehen einen solchen Querschnitt, der in seiner Form der Form von zwei sich überlappenden Kreisen entspricht.

Mit anderen Worten unterscheidet sich die erfindungsgemäße Vorrichtung von dem eingangs aufgeführten Stand der Technik im Wesentlichen dahingehend, daß hierbei zwei kreisrunde Filter nebeneinander liegend und überlappend in einem entsprechend geformten zweiten Bereich des Verbindungskanals angeordnet sind, wobei stromauf dieser beiden Filter ein erster Bereich des Verbindungskanals ebenfalls überlappende kreisförmige Querschnitte aufweist, so daß hierdurch ein einziger gemeinsamer Fluidverteilungsraum für beide Filter ausgebildet wird.

Die erfindungsgemäße Vorrichtung weist eine Reihe von Vorteilen auf. So ist zunächst festzuhalten, daß sie im Unterschied zu der aus der DE 195 19 907 C bekannten Vorrichtung selbst bei identisch großen Filtern eine wesentlich kürzere Baulänge besitzt, da hierbei der Raum stromauf der Filter nicht als getrennt angeordnete und parallel verlaufende Einzelbohrungen ausgebildet sind. Durch die kompakte Anordnung der beiden Filter in überlappender Weise und nebeneinander liegend wird es bei der erfindungsgemäßen Vorrichtung möglich, unter Inkaufnehmen einer geringfügigen Reduzierung der Filterfläche, die von dem Grad der Überlappung der beiden Filter abhängt, die erforderliche Dichtfläche zwischen der Bolzenwandung und der diese tragenden Innenfläche der Bohrung erheblich zu reduzieren, was einen entsprechenden Kostenvorteil bei der Herstellung der erfindungsgemäßen Vorrichtung bewirkt, da hohe Präzisionsanforderungen an den Bolzen und der Bohrungsinnenwandung zu stellen sind.

Auch im Vergleich zu dem aus der DE 295 17 140 U bekannten Vorrichtung läßt sich die erfindungsgemäße Vorrichtung wesentlich preiswerter herstellen, da hierbei, wie bereits vorstehend ausgeführt ist, der erste und zweite Bereich des Verbindungskanal aus zwei sich überlappenden Bohrungen bestehen, während bei der bekannten Vorrichtung aufgrund der ovalen Ausgestaltung des Filters diese beiden Bereiche, die sich stromauf des ovalen Filters befinden, ebenfalls als ovaler Verbindungskanalbereich ausgearbeitet werden muß, was zusätzliche Bearbeitungsschritte erfordert. Desweiteren stellen diese, bei der bekannten Vorrichtung einzusetzende ovale Filter Spezialanfertigungen dar, die im Vergleich zu den bei der erfindungsgemäßen Vorrichtung verwendeten Filter um ein Mehrfaches teurer sind, so daß bei jedem Austausch der Filter, was beispielsweise im Stunden- oder Tagesrhythmus erforderlich ist, erhebliche Zusatzkosten entstehen. In der speziellen Ausgestaltung als ovales Filter kann auch ein Grund für eine eingeschränkte technische Anwendung der bekannten Vorrichtung zu sehen sein, da hierfür nicht die Vielzahl der Filterfeinheiten angeboten werden, wie dies bei herkömmlichen runden Filtern der Fall ist. Desweiteren erfordert auch die bekannte Vorrichtung wegen ihrer ovalen Ausgestaltung des Filters auch die Herstellung von speziell oval ausgebildeten Stützvorsprüngen, die in den Verbindungskanal stromab der Filter hineinragen, was herstellungsbedingt weitere Zusatzkosten bei der aus der DE 295 17 140 U bekannten Vorrichtung erfordert.

Darüber hinaus ist noch als weiterer Vorteil der erfindungsgemäßen Vorrichtung festzuhalten, daß im Vergleich zu einer Siebwechselvorrichtung, die nur ein einziges Filter besitzt bei einem identischen Durchmesser des Bolzens die Filterfläche bei der erfindungsgemäßen Vorrichtung, abhängig vom Grad der Überlappung der beiden Filter, erheblich vergrößert, so insbesondere um das 1,5-fache bis zum 2-fachen, vergrößert ist, so daß hieraus entsprechend verlängerte Betriebszeiten resultieren, bevor ein Austausch der Filter, verbunden mit einer Produktionsunterbrechung, erforderlich wird.

Klarstellend sei hervorgehoben, daß die erfindungsgemäße Vorrichtung im Vergleich zu der aus der DE 195 19 907 C bekannten Vorrichtung kein Rückspülen der Filter sondern lediglich ein kontinuierliches Filtrieren der Flüssigkeit bis zu einem Zeitpunkt, an dem die Filterflächen entsprechend verschmutzt sind und somit ein Austausch notwendig wird, ermöglicht.

Desweiteren ist festzuhalten, daß der in der vorliegenden Beschreibung verwendete Begriff überlappen so aufzufassen ist, daß dieser Begriff sowohl ein Berühren der nebeneinander angeordneten Filter als auch ein Überschneiden der Filter selbst abdeckt, wobei im Überschneidungsbereich nicht zwangsläufig die Filter in doppelter Lage angeordnet sind. Vielmehr ist es abhängig von der jeweiligen Viskosität, der Art der Einführung der zu filtrierenden Flüssigkeit in den Flüssigkeitsverteilungsraum und der Art und Weise der Strömungsverhältnisse im Flüssigkeitsverteilungsraum, da im Überlappungsbereich der beiden kreisförmigen Filter das Filter dort einlagig, zweilagig oder auch viellagig angeordnet ist, wobei durch diese Variation des Überlappungsraumes, sowohl bezüglich seiner Größe als auch bezüglich der Anzahl der dort vorgesehenen Lage des Filters, die erfindungsgemäße Vorrichtung besonders einfach und wirksam auf die jeweils zu filtrierende Flüssigkeit derart anpaßbar macht, daß sichergestellt wird, daß auch tatsächlich die Gesamtfilterfläche, die sich aus den überlappenden runden Einzelfiltern zusammensetzt, vollständig und gleichmäßig angeströmt und durchströmt wird.

Desweiteren bedeutet der im Zusammenhang mit der Anordnung der Filter im Verbindungskanal verwendete Begriff quer zur Strömungsrichtung der Flüssigkeit, daß diese Filter so ausgerichtet sind, daß sie senkrecht zur Strömungsrichtung der Flüssigkeit in den Verbindungskanal hineinragen, so daß tatsächlich die Flüssigkeit die Filter auch durchströmt. Ferner ist klarstellend festzuhalten, daß bei der erfindungsgemäßen Vorrichtung als Verbindungskanal der Kanal bezeichnet wird, der sich ausschließlich im Bolzen befindet und der sich quer durch die gesamte Stärke des Bolzens erstreckt, wobei stromauf der Filter dieser Verbindungskanal am Zufuhrkanal und stromab der Filter dieser Verbindungskanal am Abfuhrkanal endet. Die Begriff stromauf und stromab werden in der vorliegenden Beschreibung derart verwendet, daß sie sich auf die Strömungsrichtung der Flüssigkeit während des Filtrierens beziehen.

Eine besonders geeignete Ausführungsform der erfindungsgemäßen Vorrichtung sieht vor, daß hierbei der erste und zweite Bereich des Verbindungskanals durch zwei sich überschneide Bohrungen mit identischen Durchmessern ausgebildet ist, die sich senkrecht zur Axialrichtung des Bolzens, vorzugsweise des zylindrischen Bolzens, über etwa 30 % bis 60 % der Gesamtdicke des Bolzens erstrecken. Mit anderen Worten erstrecken sich bei dieser Ausführungsform der erfindungsgemäßen Vorrichtung der erste und der zweite Bereich des Verbindungskanals bis etwa zur radialen Mitte des Bolzens, so daß dementsprechend dort auch die Filter angeordnet sind, die somit bezüglich ihrer Filterfläche eine maximale Größe für den jeweiligen zylindrischen Bolzen besitzen.

Insbesondere dann, wenn mit der erfindungsgemäßen Vorrichtung solche Kunststoffschmelzen bearbeitet werden sollen, die bereits bei einer geringfügigen Temperaturabsenkung erhärten und dabei an den Kanalwandungen Ablagerungen ausbilden, die nur sehr schwer zu entfernen sind, empfiehlt es sich, hier solche dimensionierte erste und zweite Bereiche des Verbindungskanals auszuwählen, die sich nur über 30 % bis etwa 40 % der Gesamtdicke des Bolzens erstrecken, während, wie bereits vorstehend dargelegt, unter dem Gesichtspunkt der Maximierung der Filterflächen vorzugsweise abhängig von der Dicke der Filter und der Verwendung von Stützplatten, an die sich die Filter während des Filtrierens anlehnen, dann die Position der Filter und somit die Länge der ersten und der zweiten Bereiche des Verbindungskanals so ausgewählt werden, daß vorzugsweise die Filter selbst in der radialen Mitte des Bolzens positioniert sind.

Überraschend konnte festgestellt werden, daß bei einer Vielzahl von zu filtrierenden Flüssigkeiten, die sich insbesondere auch in ihrem rheologischen Verhalten unterscheiden, dann hervorragende Strömungsverhältnisse insbesondere bezüg lich der Gleichmäßigkeit der Anströmung der Gesamtfilterfläche erreicht werden, wenn sich die Querschnittsflächen der ersten und zweiten Bereiche des Verbindungskanals, in der sich die beiden kreisförmigen Querschnitte überlappen, 3 bis 50 % und vorzugsweise 20 bis 40 % der Gesamtquerschnittsfläche ausmachen. Mit anderen Worten wird somit bei dieser Ausführungsform der erfindungsgemäßen Vorrichtung im Vergleich zu einer bekannten Vorrichtung, die stromauf des Filters lediglich einen einzigen kreisförmigen Verbindungskanalbereich aufweist, die Querschnittsfläche des ersten und zweiten Bereiches des Verbindungskanals bei der erfindungsgemäßen Vorrichtung um den Faktor 1,97 bis 1,5, vorzugsweise um den Faktor 1,8 bis 1,6, vergrößert, so daß dementsprechend auch eine hinreichend große Flüssigkeitsmenge kontinuierlich den beiden Filtern zugeführt wird, was einerseits eine merkbare Erhöhung der Produktion und andererseits eine Personaleinsparung durch Anwendung der erfindungsgemäßen Vorrichtung begründen, da eine Verlängerung der Austauschintervalle eintritt.

Um den Austausch der radial über die Bolzendicke gesehen innenliegenden beiden Filter zu vereinfachen, weist eine andere Ausführungsform der erfindungsgemäßen Vorrichtung einen solchen Verbindungskanal auf, bei dem die ersten und die zweiten Bereiche, die im Querschnitt gesehen als überlappende Kreise ausgebildet sind, eine solche Dimension besitzen, die geringfügig größer ist als der Durchmesser eines jeden kreisförmigen Filters. Insbesondere konnte festgestellt werden, daß auch bei Ablagerungen von Flüssigkeitsresten an Wandungen des ersten und zweiten Bereiches des Verbindungskanals ein problemloser Austausch der Filter möglich ist, wenn die sich im Querschnitt gesehen überlappenden Kreise des ersten Bereiches und des zweiten Bereiches einen solchen Durchmesser aufweisen, der insbesondere 5 % bis 15 % größer ist als der Durchmesser des runden Filters.

Eine besonders wirksame Vergrößerung der Gesamtfilterfläche unter Beibehaltung einer vorgegebenen Bolzendicke wird bei einer solchen Ausführungsform der erfindungsgemäßen Vorrichtung erreicht, bei der die beiden Bereiche derart im Bolzen, insbesondere in einem zylindrischen Bolzen, angeordnet sind, daß in axiale Verschieberichtung des Bolzens relativ zur Gehäusebohrung gesehen ihre Querschnitte in etwa der Form einer liegenden Acht aufweisen. Mit anderen Worten besitzen somit bei dieser Ausführungsform der erfindungsgemäßen Vorrichtung in axiale Richtung des Bolzens gesehen die beiden Bereiche ihre größte Abmessung, während die Abmessung senkrecht zu dieser Axialrichtung dem Durchmesser der Filter oder einer Größe entspricht, die, wie bereits zuvor bei einer bevorzugten Ausführungsform beschrieben ist, 5 % bis 15 % größer ist, um so die Entnahme der Filter aus diesem Verbindungskanalbereich zu erleichtern.

Um bei der erfindungsgemäßen Vorrichtung zu verhindern, daß im Überlappungsbereich ungefilterte Flüssigkeit die Filter passieren, sieht eine andere, bevorzugte Ausführungsform der erfindungsgemäßen Vorrichtung vor, daß sich hierbei die Filter zwischen 2 % und 10 %, bezogen auf die Gesamtfilterfläche, im Überlappungsbereich mehrlagig überlappen, wobei vorzugsweise dort zwei Lagen der Filter dicht übereinanderliegend angeordnet sind. Mit anderen Worten wird bei dieser Ausgestaltung der erfindungsgemäßen Vorrichtung zwischen 98 % und 90 % der Gesamtfilterfläche durch die beiden runden einlagigen Filter ausgebildet, während die verbleibenden 2 % bis 10 % der Gesamtfilterfläche eine mehrlagige Anordnung der Filter aufweisen. Dies hat zur Folge, daß dieser Überlappungsbereich der diesen Überlappungsbereich durchströmenden und zu filtrierenden Flüssigkeit einen größeren Strömungswiderstand bietet, so daß dementsprechend in erwünschter Weise eine besonders gleichmäßige Flüssigkeitsverteilung über die verbleibende einlagige Gesamtfilterfläche erfolgt.

In vorteilhafter Weiterbildung der zuvor beschriebenen Ausführungsformen der erfindungsgemäßen Vorrichtung sieht eine besonders leistungsfähige Ausgestaltung der erfindungsgemäßen Vorrichtung vor, daß die Vorrichtung zwei parallel zueinander ausgerichtete Bolzen mit jeweils zwei Filtern aufweist und daß sich der Zufuhrkanal auf zwei Zufuhrteilkanäle aufteilt, wobei diese beiden Zufuhrteilkanäle ebenfalls ausschließlich im Gehäuse positioniert sind. Hierdurch läßt sich im Vergleich zu den zuvor beschriebenen Ausführungsformen der erfindungsgemäßen Vorrichtung, die lediglich einen Bolzen mit jeweils zwei Filtern aufweisen, eine Verdopplung der Filtrierkapazität erreichen. Desweiteren erlaubt diese Ausgestaltung der erfindungsgemäßen Vorrichtung, daß das Filtrieren der Flüssigkeit selbst dann nicht unterbrochen werden muß, wenn sich ein Bolzen in seiner von außen zugänglichen Reinigungsstellung befindet, d.h. in einer Stellung, in denen die beiden Filter dieses Bolzens ausgewechselt werden und somit für die eigentliche Filtrierung nicht zur Verfügung stehen. Dies hat zur Folge, daß bei dieser bevorzugten Ausführungsform der erfindungsgemäßen Vorrichtung bei einem Auswechseln der beiden Filter eines Bolzens keine Produktionsunterbrechung auftritt.

Um bei dieser zuvor beschriebenen besonders vorteilhaften Ausgestaltung der erfindungsgemäßen Vorrichtung, die, wie vorstehend beschrieben ist, zwei Bolzen oder auch entsprechend weitere zusätzliche Bolzen noch aufweisen kann, eine einwandfreie und gleichmäßige Verteilung der zu filtrierenden Flüssigkeit über die Gesamtfilterfläche zu erreichen, wird bei einer Weiterbildung jeder Zufuhrteilkanal derart in dem Gehäuse ausgerichtet, daß seine Auslaßöffnung am Rand des Flüssigkeitsverteilungsraumes, vorzugsweise am axial äußeren Rand, mündet. Mit anderen Worten wird somit bei dieser Ausgestaltung der erfindungsgemäßen Vorrichtung bewußt eine randseitige Einführung der zu filtrierenden Flüssigkeit in den Flüssigkeitsverteilungsraum ausgewählt, wobei hierzu überraschend festgestellt werden konnte, daß trotz dieser randseitigen Zuführung die Gesamtfilterfläche gleichmäßig durchströmt wird.

Um bei der erfindungsgemäßen Vorrichtung die insbesondere im Flüssigkeitsverteilungsraum bei einer axialen Verschiebung des Bolzens aus der Reinigungsstellung in die Filtrierstellung angesammelte Luft zu entfernen, sieht eine vorteilhafte Weiterbildung der erfindungsgemäßen Vorrichtung vor, daß hierbei dem Flüssigkeitsverteilungsraum eine Entlüftungsöffnung zugeordnet ist, die vorzugsweise als eine dem Rand des Flüssigkeitsverteilungsraumes zugeordnete und axial über den Bolzen teilweise verlaufende Nut ausgestaltet ist. Somit bildet diese axial verlaufende Nut zusammen mit Wandung der Gehäusebohrung, die den Bolzen axial verschiebbar haltert, einen vorzugsweise außerhalb des Gehäuses mündenden Kanal aus, der so am Bolzen ausgerichtet ist, daß er bei einer axialen Verschiebung des Bolzens dann verschlossen ist, wenn der Bolzen sich in seiner Filtrierstellung befindet.

Insbesondere dann, wenn die erfindungsgemäße Vorrichtung zusätzlich zu der zuvor beschriebenen Nut noch eine weitere, ebenfalls axial verlaufende Nut aufweist, und diese beiden Nuten relativ zum Rand des Flüssigkeitsverteilungsraumes an axial entgegengesetzten Enden angeordnet sind, läßt sich bei dieser Ausgestaltung der erfindungsgemäßen Vorrichtung besonders schonend die im Flüssigkeitsverteilungsraum angesammelte Luft entfernen, wenn der Bolzen mit einer vorgegebenen Geschwindigkeit aus der Reinigungsstellung in seine Filtrierstellung wieder axial verschoben wird. Hier erlaubt nämlich die weitere axial verlaufende Nut, daß über die weitere Nut zunächst eine relativ geringe Menge zu filtrierender Flüssigkeit dem Flüssigkeitsverteilungsraum zugeführt wird, so daß dementsprechend auch die Luft hieraus sukzessive über die andere axial verlaufende Nut entfernt wird. Bei einer kontinuierlichen weiteren Verschiebung des Bolzens wird dann sukzessive die dem Flüssigkeitsverteilungsraum zugeführte Menge an zu filtrierender Flüssigkeit erhöht, so daß die Luft auch dementsprechend weiter aus dem Flüssigkeitsverteilungsraum so lange verdrängt wird, bis dieser ausschließlich mit der zu filtrierenden Flüssigkeit gefüllt ist.

Insbesondere bietet es sich auch bei der erfindungsgemäßen Vorrichtung an, daß in Strömungsrichtung der zu filtrierenden Flüssigkeit gesehen der Verbindungskanal einen dritten Bereich aufweist, der stromab der beiden nebeneinander angeordneten Filter vorgesehen ist, wobei in diesem dritten Bereich der Verbindungskanal einen gemeinsamen Verbindungskanalendabschnitt aufweist, der einen runden Querschnitt besitzt. Hierdurch wird insbesondere sichergestellt, daß bei dieser Ausführungsform der erfindungsgemäßen Vorrichtung der Verbindungskanalendabschnitt einwandfrei und ohne Ausbildung von strömungstechnisch störenden Ecken und/oder Kanten mit dem Abfuhrkanal fluchtet, so daß das stromab der Vorrichtung angeordnete Werkzeug oder die dort vorgesehene Düse mit dem strömungstechnisch beruhigten Strom einer filtrierten Flüssigkeit versorgt wird.

Um bei der erfindungsgemäßen Vorrichtung die für das Filtrieren benötigten beiden nebeneinanderliegend angeordnete Filter sicher zu haltern, sieht eine andere bevorzugte Ausgestaltung der erfindungsgemäßen Vorrichtung vor, daß hier eine stromab der Filter angeordnete und mit Durchtrittskanälen versehene Stützplatte diesen beiden nebeneinander angeordneten Filtern zugeordnet ist. Hierbei weist diese Stützplatte in Strömungsrichtung der zu filtrierenden Flüssigkeit gesehen zunächst eine planare Stützfläche zum Abstützen und Halter der Filter auf, wobei sich die beiden Filter während des Filtriervorganges an diese Stützfläche anlehnen. Stromab dieser Stützfläche ist die Stützplatte einstückig mit einem kugelartig ausgewölbten Bereich versehen, wobei sowohl die Stützfläche als auch der ausgewölbte Bereich mit entsprechend dimensionierten Durchtrittskanälen ausgestattet ist. Um diese Stützplatte dauerhaft und ohne Auftreten eines unerwünschten Versetzens innerhalb des zweiten Bereiches des Verbindungskanals zu haltern, weist diese Stützplatte auf der stromabwärtigen Flächen der Stützfläche eine mit gleichmäßigem Abstand von Rand der Stützplatte ausgebildete planare Randfläche auf, die an einer in den Verbindungskanal hineinragende Wandungsfläche abgestützt wird, wobei in der Draufsicht gesehen zumindestens die Stützfläche eine Form besitzt, die der Form des zweiten Bereiches des Verbindungskanals entspricht.

Unter strömungstechnischen Gesichtspunkten, insbesondere unter dem Gesichtspunkt der Vergleichmäßigung der Anströmung und der Durchströmung der Gesamtfilterfläche, gesehen ist es von besonderem Vorteil, wenn der stromab der Stützfläche angeordnete ausgewölbte Bereich aus zwei, sich überschneidenden und symmetrischen Kugelkalotten ausgebildet ist, die sich in der zentralen Mitte des Verbindungskanals berühren oder unter Ausbildung einer gemeinsamen Schnittfläche überschneiden. Eine derartige Stützplatte läßt sich besonders preiswert und mit einer hohen Präzision sehr einfach dadurch herstellen, daß zwei herkömmlichen Stützplatten unter Ausbildung einer gemeinsamen Schnittfläche abgeschnitten und anschließend miteinander entlang der Schnittfläche verbunden werden.

Vorteilhafte Weiterbildungen der erfindungsgemäßen Vorrichtung sind in den Unteransprüchen angegeben.

Die erfindungsgemäße Vorrichtung wird nachfolgend anhand einer Ausführungsform in Verbindung mit der Zeichnung näher erläutert. Es zeigen:
- Figur 1: ein schematischer Vertikalschnitt durch die Vorrichtung, teilweise mit perspektivischer schematischer Andeutung der Ansicht;
- Figur 2: einen schematischen Vertikalschnitt längs der Linie C-D in Figur 1;
- Figur 3: einen schematischen Horizontalschnitt längs der Linie A-B in Figur 1 und
- Figur 4: eine perspektivische Ansicht eines Bolzens.

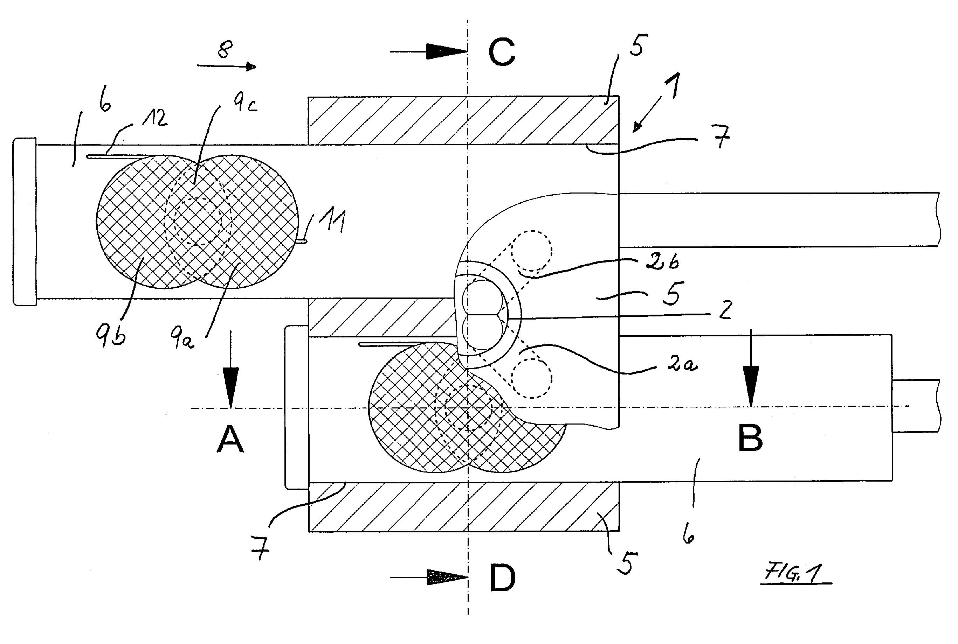

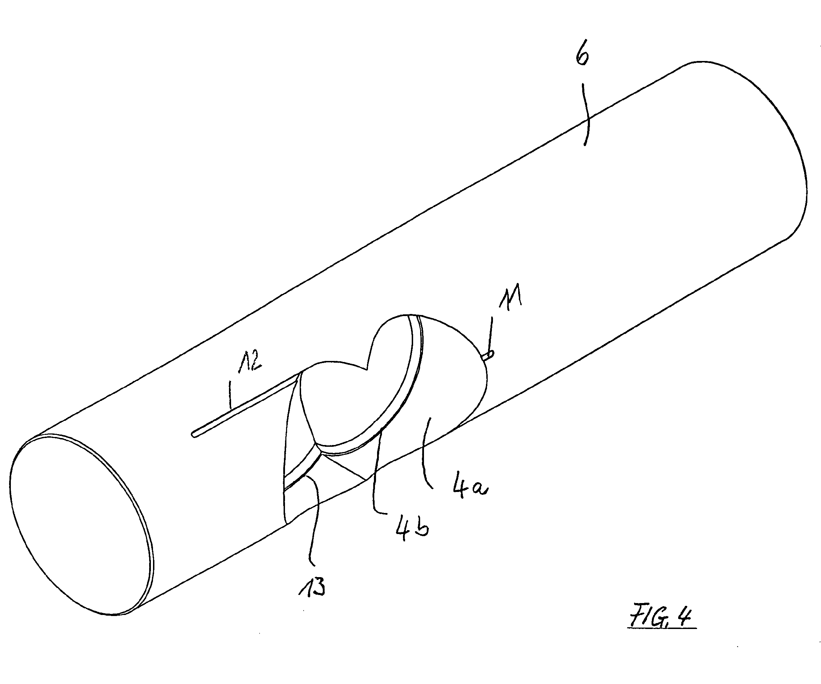

In den Figuren 1 bis 3 sind unterschiedliche Schnittansichten bzw. in Figur 4 eine perspektivische Ansicht einer Ausführungsform der Filtriervorrichtung wiedergeben, wobei in allen Figuren die selben Teile mit den selben Bezugsziffern versehen sind.

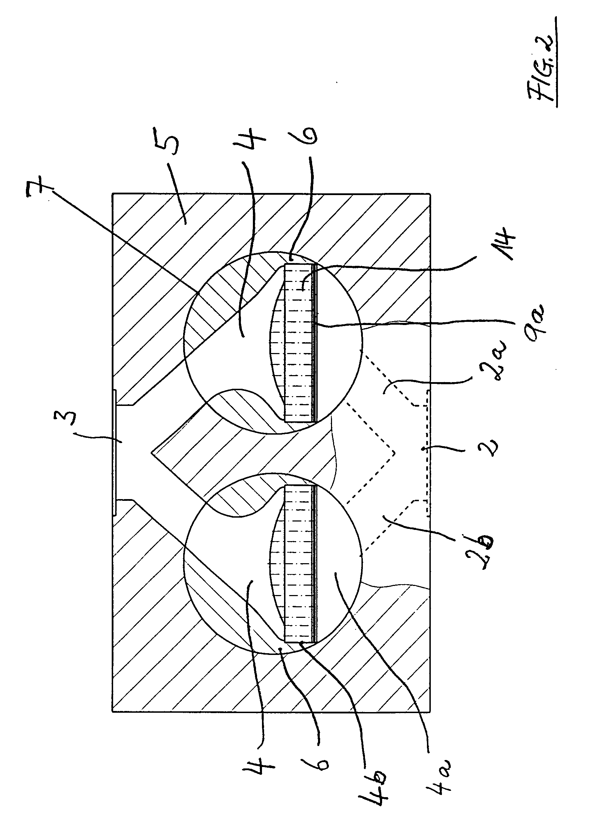

Eine insgesamt mit 1 bezeichnete Vorrichtung zum Filtrieren einer Flüssigkeit, insbesondere zum Filtrieren einer Kunststoffschmelze, weist ein Gehäuse 5 auf, wobei innerhalb des Gehäuses 5 ein Zufuhrkanal 2 und ein Abfuhrkanal 3 angeordnet sind. Der Zufuhrkanal 2 ist mit dem Abfuhrkanal 3 über einen Verbindungskanal 4 verbunden, wobei sich der Verbindungskanal 4 über die gesamte Dicke eines Bolzens 6 erstreckt, der in einer Gehäusebohrung 7 flüssigkeitsdicht und axial verschiebbar (Pfeilrichtung 8 und umgekehrt hierzu) gelagert ist, wie dies am besten in den Figuren 1 und 2 zu erkennen ist.

Bei dem ausgewählten Ausführungsbeispiel weist die Vorrichtung 1 zwei parallel zueinander angeordnete und identisch ausgestaltete Bolzen 6 auf, die mit Bezug auf die Figur 1 nachfolgend auch als oberer Bolzen 6 und als unterer Bolzen 6 bezeichnet werden.

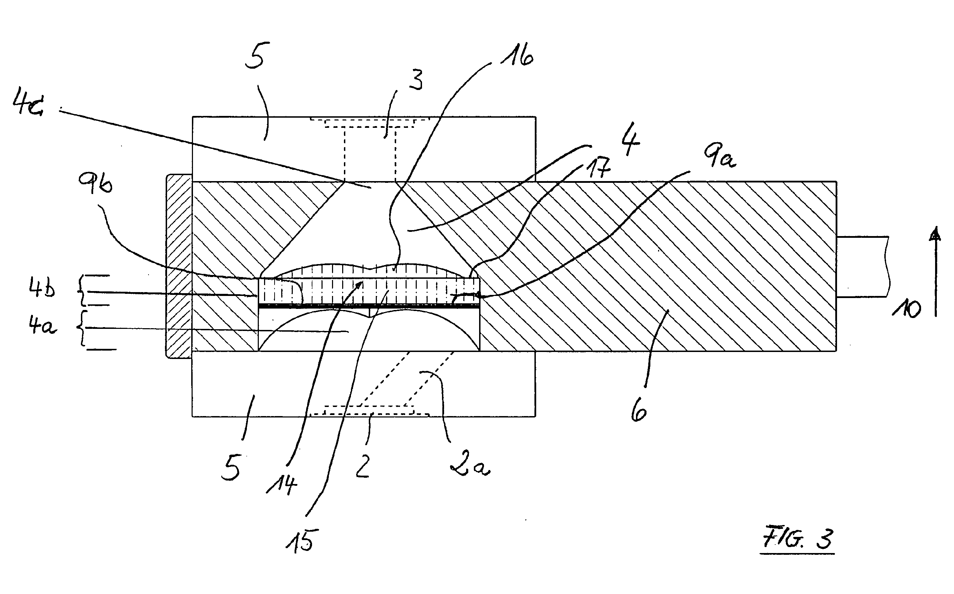

Jeder Bolzen 6 der Vorrichtung 1 weist einen Verbindungskanal 4 auf, der sich über die gesamte Dicke des zylindrischen Bolzens 6 erstreckt, wobei der Verbindungskanal 4 in Strömungsrichtung (Pfeil 10 - Figur 3) der zu filtrierenden Flüssigkeit gesehen einen ersten Bereich 4a, einen zweiten Bereich 4b und einen dritten Bereich 4c besitzt. Innerhalb des zweiten Bereiches 4b des Verbindungskanals 4 sind zwei, unmittelbar sich überlappende Filter 9a und 9b vorgesehen, wie dies insbesondere den schematischen Ansichten der Figuren 1 und 3 zu entnehmen ist. Stromauf dieser nebeneinander angeordnete Filter 9a und 9b, die sich im Bereich 9c überlappen, weist der Verbindungskanal 4 den ersten Bereich 4a auf, der gleichzeitig für beide Filter 9a und 9b einen Flüssigkeitsverteilungsraum ausbildet.

Der erste Bereich 4a und der zweite Bereich 4b des Verbindungskanals 4 besitzen einen solchen Querschnitt, der der Querschnittsform von sich überlappenden kreisförmigen Querschnitten entspricht, wobei diese Querschnittsform auch vorstehend als liegende Acht bezeichnet ist.

Wie insbesondere aus den Figuren 1 und 2 zu erkennen ist, teilt sich innerhalb des Gehäuses 5 der Zufuhrkanal 2 auf zwei Zufuhrteilkanäle 2a und 2b auf, um so den Flüssigkeitsverteilungsraum 4a gleichmäßig mit zu filtrierender Flüssigkeit zu versorgen. Die Austrittsöffnung dieser Zufuhrteilkanäle 2a bzw. 2b münden randseitig (rechter Rand; Figur 1) in den Flüssigkeitsverteilungsraum 4a, wobei im Bereich dieser Einmündung der Zufuhrteilkanäle 2a bzw. 2b der Bolzen eine axial verlaufende Nut 11 in seiner Mantelfläche aufweist, wie dies am besten in den Figuren 1 und 4 zu erkennen ist. Entgegengesetzt zu dieser axialen Nut 11 ist in der Mantelfläche des Bolzens eine weitere, ebenfalls axial verlaufende Nut 12 vorgesehen, wobei beide Nuten 11 und 12 endseitig mit dem Flüssigkeitsverteilungsraum 4a verbunden sind.

Wie insbesondere aus der Figur 4 zu erkennen ist, die perspektivisch den Bolzen ohne entsprechende Filter abbildet, weist der Bereich 4b am Rande verlaufende und in den Verbindungskanal 4 radial hineinspringende Vorsprünge 13 auf, die zur Halterung einer Stützplatte 14 (Figur 2) für die Filter 9a und 9b dienen, wobei sich die jeweilige Stützplatte 14 während des Filtrierens gegen die Vorsprünge 13 abstützen.

Jede Stützplatte 14 (Figur 3), die zur Halterung von jeweils zwei Filtern 9a und 9b dient, weist eine planare Stützfläche 15 und einen sich hieran anschließenden kugelkalottenartig ausgewölbten Bereich 16 auf, wobei sowohl die Stützplatte 15 als auch der hiermit einstückig verbundene kugelkalottenartige Bereich 16 mit Durchtrittskanälen versehen ist, die stromab der Filter 9a bzw. 9b eine Durchgangspassage für die filtrierte Flüssigkeit ausbilden. Bei der in Figur 3 gezeigten Stützplatte 14 wird der ausgewölbte Bereich 16 dadurch ausgebildet, daß zwei Kugelkalotten unter Ausbildung einer gemeinsamen Schnittfläche miteinander symmetrisch verbunden werden. Desweiteren besitzt die Stützplatte 14 eine planare Randfläche 17, die stromab der Stützfläche vorgesehen ist, wobei diese planare Randfläche 17 an den Vorsprüngen 13 anliegt.

Die vorstehend beschriebene Vorrichtung wird wie folgt verwendet. Stromauf des Zufuhrkanals 2 befindet sich in der Regel ein nicht gezeigter Extruder, der die zu filtrierende Flüssigkeit, insbesondere die Kunststoffschmelze, in Pfeilrichtung 10 durch die Vorrichtung 1 kontinuierlich fördert. Hierbei befinden sich beide Bolzen 6 in einer Stellung, wie diese in Figur 1 für den unteren Bolzen 6 gezeigt ist, d.h. die zu filtrierende Flüssigkeit wird über den Zufuhrkanal 2, die sich hieran anschließenden Zufuhrteilkanäle 2a und 2b zu dem stromauf der Filter 9a bzw. 9b befindlichen Flüssigkeitsverteilungsräumen 4a von beiden Bolzen geleitet. Hiernach durchströmt die zu filtrierende Flüssigkeit die beiden nebeneinander angeordneten Filter 9a, 9b und gelangt in den Verbindungsendkanalabschnitt 4c, der mit dem Abfuhrkanal 3 fluchtet.

Wird nunmehr während des Filtrierens festgestellt, daß ein Filterpaar mit abfiltrierten Partikeln beladen ist, so fährt der diesbezügliche Bolzen aufgrund seiner axialen Verschiebung in eine Position, wie sie in Figur 1 für den oberen Bolzen 6 dargestellt ist. In dieser Position, die vorstehend auch Reinigungsstellung bezeichnet ist, können die Filter 9a und 9b aus dem entsprechenden Bereich 4b des Verbindungskanals 4 entnommen und durch neue Filter ausgetauscht werden, so daß durch eine axiale Verschiebung in Pfeilrichtung 8 dann dieser Bolzen wieder in Richtung auf die Filtrierstellung bewegt wird. Hierbei tritt zunächst die Mündung des Zufuhrteilkanals 2b mit der Nut 11 in Kontakt, was dazu führt, daß ein Teilstrom der zu filtrierenden Flüssigkeit in den Flüssigkeitsverteilungsraum gelenkt wird, während gleichzeitig über die andere Nut 12, deren Ende sich teilweise noch außerhalb des Gehäuses 5 befindet, die im Flüssigkeitsverteilungsraum angesammelte Luft durch die eindringende Flüssigkeit verdrängt wird. Bei einer weiteren axialen Verschiebung des Bolzens 6 in Pfeilrichtung 8 dringt dann, sobald der Flüssigkeitsverteilungsraum 4a vollständig entlüftet ist, Flüssigkeit über die Nut 12 nach außen, so daß zu diesem Zeitpunkt abschließend der Bolzen in seine Filtrierstellung gebracht wird, wie diese in Figur 1 für den unteren Bolzen abgebildet ist.

Der Vollständigkeit halber sei angemerkt, daß die Schnittansicht gemäß Figur 2 die in Figur 1 gezeigte Vorrichtung 1 in einer Stellung abbildet, in der beide Bolzen 6 eine Position einnehmen, wie diese für den unteren Bolzen 6 abgebildet ist.

## Patentansprüche

1. Vorrichtung zum Filtrieren einer Flüssigkeit, insbesondere zum Filtrieren einer polymeren Kunststoffschmelze, mit einem Gehäuse, das in Strömungsrichtung der zu filtrierenden Flüssigkeit gesehen einen Zufuhrkanal, einen in einem Bolzen angeordneten Verbindungskanal und einen Abfuhrkanal umfaßt, wobei der Verbindungskanal mindestens zwei nebeneinander angeordnete und quer zur Strömungsrichtung der Flüssigkeit im Verbindungskanal ausgerichtete Filter aufweist und der Bolzen flüssigkeitsdicht in einer Bohrung des Gehäuses axial verschiebbar derart gelagert ist, daß durch eine axiale Verschiebung des Bolzens die beiden Filter zwischen einer Filtrierstellung, in der über den Verbindungskanal der Zufuhrkanal mit dem Abfuhrkanal verbunden ist, und einer von außen zugänglichen Reinigungsstellung, in der die Verbindung vom Zufuhrkanal mit dem Abfuhrkanal unterbrochen ist, und umgekehrt bringbar sind, **dadurch gekennzeichnet, daß** der Verbindungskanal (4) in Strömungsrichtung (10) der zu filtrierenden Flüssigkeit gesehen einen ersten Bereich (4a) aufweist, der unmittelbar stromauf der Filter (9a, 9b) angeordnet ist und einen einzigen gemeinsamen Flüssigkeitsverteilungsraum (4a) für die beiden Filter (9a, 9b) ausbildet, und daß sich unmittelbar an den ersten Bereich (4a) ein zweiter Bereich (4b) anschließt, in dem die beiden Filter (9a, 9b) nebeneinander derart angeordnet sind, daß sich die beiden Filter (9a, 9b) teilweise überlappen, wobei der erste Bereich (4a) und der zweite Bereich (4b) des Verbindungskanals (4) senkrecht zur Strömungsrichtung der zu filtrierenden Flüssigkeit gesehen einen solchen Querschnitt aufweisen, der in seiner Form der Form von zwei sich überlappenden Kreisen entspricht.

2. Vorrichtung nach Anspruch 1, **dadurch gekennzeichnet, daß** der erste und der zweite Bereich (4a, 4b) des Verbindungskanals (4) durch zwei sich überschneidende Bohrungen mit identischen Durchmessern ausgebildet ist, die sich senkrecht zur Axialrichtung des Bolzens (6) über etwa 30 % bis etwa 60 % der Gesamtdicke des Bolzens (6) erstrecken.

3. Vorrichtung nach Anspruch 1 oder 2, **dadurch gekennzeichnet, daß** die Querschnittsfläche, in der sich die beiden kreisförmigen Querschnitte der beiden Bereiche (4a, 4b) überlappen, 3 bis 50 % der Gesamtquerschnittsfläche beträgt.

4. Vorrichtung nach Anspruch 3, **dadurch gekennzeichnet, daß** die Querschnittsfläche, in der sich die beiden kreisförmigen Querschnitte der beiden Bereiche (4a, 4b) überlappen, 20 bis 40 % der Gesamtquerschnittsfläche beträgt.

5. Vorrichtung nach einem der vorangehenden Ansprüche, **dadurch gekennzeichnet, daß** die sich überlappenden Querschnittskreise der beiden Bereiche (4a, 4b) einen Durchmesser aufweisen, der 5 % bis 15 % größer ist als der Durchmesser des runden Filters (9a, 9b).

6. Vorrichtung nach einem der vorangehenden Ansprüche, **dadurch gekennzeichnet, daß** die beiden Bereiche (4a, 4b) derart im Bolzen (6) angeordnet sind, daß in axiale Verschieberichtung (8) des Bolzens (6) gesehen ihre Querschnitte in etwa der Form einer liegenden Acht aufweisen.

7. Vorrichtung nach einem der vorangehenden Ansprüche, **dadurch gekennzeichnet, daß** sich die Filter (9a, 9b) zwischen 2 % und 10 %, bezogen auf die Gesamtfilterfläche, mehrlagig überlappen.

8. Vorrichtung nach einem der vorangehenden Ansprüche, **dadurch gekennzeichnet, daß** die Vorrichtung (1) zwei parallel zueinander ausgerichtete Bolzen (6) mit jeweils zwei Filtern (9a, 9b) aufweist und daß sich der Zufuhrkanal (2) auf zwei Zufuhrteilkanäle (2a, 2b) aufteilt, die beide ebenfalls im Gehäuse (5) positioniert sind.

9. Vorrichtung nach Anspruch 8,**dadurch gekennzeichnet, daß** jeder Zufuhrteilkanal (2a, 2b) derart ausgerichtet ist, daß seine Auslaßöffnung am Rand des Flüssigkeitsverteilungsraumes (4a), vorzugsweise am axial äußeren Rand, mündet.

10. Vorrichtung nach einem der vorangehenden Ansprüche, **dadurch gekennzeichnet, daß** dem Rand des Flüssigkeitsverteilungsraumes (4a) eine axial über den Bolzen (6) teilweise verlaufende Nut (12) zugeordnet ist.

11. Vorrichtung nach einem der vorangehenden Ansprüche, **dadurch gekennzeichnet, daß** dem Bereich des Flüssigkeitsverteilungsraumes (4a), der relativ zum Rand des Flüssigkeitsverteilungsraumes (4a) axial entgegengesetzt angeordnet ist, eine weitere, axial verlaufende Nut (11) zugeordnet ist.

12. Vorrichtung nach einem der vorangehenden Ansprüche, **dadurch gekennzeichnet, daß** in Strömungsrichtung (10) der zu filtrierenden Flüssigkeit gesehen der Verbindungskanal (4) einen dritten Bereich (4c) aufweist, der stromab der beiden nebeneinander angeordneten Filter (9a, 9b) vorgesehen ist, wobei in diesem dritten Bereich (4c) der Verbindungskanal (4) einen gemeinsamen Verbindungskanalendabschnitt mit rundem Querschnitt aufweist.

13. Vorrichtung nach einem der vorangehenden Ansprüche, **dadurch gekennzeichnet, daß** den beiden Filtern (9a, 9b) eine stromab der Filter (9a, 9b) angeordnete und mit Durchtrittskanälen versehene Stützplatte (14) zugeordnet ist, die in Strömungsrichtung (10) der zu filtrierenden Flüssigkeit gesehen eine planare Stützfläche (15) zum Abstützen und Haltern der Filter (9a, 9b) während dem Filtrieren und einen hiermit verbundenen und in Strömungsrichtung kugelartig ausgewölbten Bereich (16) aufweist, wobei der ausgewölbte Bereich mit weiteren Durchtrittskanälen versehen ist, daß die Durchtrittskanäle mit den weiteren Durchtrittskanälen fluchten und daß die planare Stützfläche (15) auf ihrer stromabwärtigen Fläche eine planare Randfläche (17) aufweist.

14. Vorrichtung nach Anspruch 13, **dadurch gekennzeichnet, daß** der ausgewölbte Bereich (16) aus zwei, sich überschneidenden symmetrischen Kugelkalotten ausgebildet ist.
